# EUROPÄISCHE PATENTANMELDUNG

(11) **EP 1 429 062 A1**
(43) Veröffentlichungstag der Anmeldung: **16.06.2004**
(21) Anmeldenummer: 03027219.9
(22) Anmeldetag: 28.11.2003
(51) Int. Cl.: F16K 27/00, F15B 13/00

(54) **Montagesystem für Ventile und Ventilgruppen**

(30) Priorität: 14.12.2002 DE 20219421 U
(71) Anmelder: A. und K. Müller GmbH & Co. KG, 40595 Düsseldorf (DE)
(72) Erfinder: Berger, Gerd, 40593 Düsseldorf (DE)
(74) Vertreter: Feder, Wolf-Dietrich, Dr. Dipl.-Phys.

(57) **Zusammenfassung**

Ein Montagesystem für Ventile und Ventilgruppen, das aus mehreren miteinander verbindbaren und voneinander lösbaren Montageelementen (M5, M6, M7) aufgebaut ist, wobei jedes Ventil (V1 bis V3) auf eine rechteckig ausgebildete Grundplatte (1) eines Montageelements aufsetzbar und auf dieser festlegbar ist. Die Grundplatte (1) eines ersten Montageelements hat an mindestens einer ersten Außenkante mindestens einen nach außen ragenden und sich nach außen erweiternden Halterungsfuß (2.1, 2.2), während die an die erste Außenkante ansetzbare Außenkante der Grundplatte (1) eines zweiten Montageelements an der beim Ansetzen dem Halterungsfuß (2.1, 2.2) gegenüberliegenden Stelle eine nach innen ragende und sich nach innen erweiternde Ausnehmung (3.1, 3.2) aufweist. Der Umriss der Ausnehmung (3.1, 3.2) ist komplementär zum Umriss des Halterungsfußes (2.1, 2.2) ausgebildet, und die von der Außenkante gemessene Länge des Halterungsfußes (2.1, 2.2) entspricht der von der Außenkante gemessenen Länge der Ausnehmung (3.1, 3.2). Die Grundplatte (1) eines Montageelements (M5 bis M7) kann an mindestens einer ersten Außenkante zwei Halterungsfüße (2.1, 2.2) und an der zur ersten parallelen zweiten Außenkante zwei Ausnehmungen (3.1, 3.2) aufweisen.

## Beschreibung

Die Erfindung betrifft ein Montagesystem für Ventile und Ventilgruppen.

Bei modernen Geräten, denen kaltes oder heißes Wasser zugeführt und im Gerät in bestimmter Weise weiterverteilt wird, ist es häufig notwendig, mehrere Elektromagnetventile in einer Ventilkombination in Serien- und/oder Parallelschaltung zusammenzuschalten. Derartige Einrichtungen, bei denen mehrere Magnetventile zusammengeschaltet sind, sind beispielsweise in EP 0 715 112 A2 und EP 0 982 520 A2 beschrieben.

Bei den bekannten Einrichtungen dieser Art muss jeweils jedes Ventil im Gerät über eine eigene Befestigungsvorrichtung befestigt sein oder es sind jeweils nur einige Ventile einer Gruppe fest mit dem Gerät verbunden und andere Ventile sind jeweils nur durch den Anschluss an ein anderes Ventil, das fest mit dem Gerät verbunden ist, im Gerät festgelegt. Bei Einrichtungen, bei denen die Ventile über Verteilerstücke zusammengeschaltet sind, können auch die Verteilerstücke über Befestigungsvorrichtungen im Gerät festgelegt sein.

In allen Fällen ist der Einbau und der Ausbau von Ventilen, beispielsweise beim Auswechseln von Ventilen oder beim Nachrüsten eines Gerätes mit zusätzlichen Ventilen, mit einem erheblichen Montageaufwand verbunden.

Der Erfindung liegt die Aufgabe zugrunde, ein Montagesystem für Ventile und Ventilgruppen zu schaffen, mit dem der Montageaufwand beim Einbau und Ausbau der Ventile erheblich reduziert werden kann und das außerordentlich vielseitig in den Einsatzmöglichkeiten ist.

Die Lösung dieser Aufgabe erfolgt erfindungsgemäß mit den Merkmalen aus dem Patentanspruch 1. Vorteilhafte Weiterbildungen des erfindungsgemäßen Montagesystems sind in den abhängigen Ansprüchen beschrieben.

Der Grundgedanke der Erfindung beruht in der Anwendung eines Verbindungssystems, das an sich bekannt ist und auf anderen Gebieten, beispielsweise auf dem Spielzeugsektor bei Puzzle-Spielen oder bei der Verbindung von Holzschienen für Spielzeugeisenbahnen bereits verwendet wird.

Bei diesem Verbindungssystem wirken grundsätzlich Halterungsfüße an einem Element mit entsprechend dem Halterungsfuß komplementärem Umriss ausgestalteten Ausnehmungen am anderen Element zusammen. Die Halterungsfüße besitzen jeweils einen sich nach außen erweiternden Querschnitt, so dass nach dem Einführen des Halterungsfußes in die Ausnehmung in einer Richtung senkrecht zur Verbindungsrichtung der Halterungsfuß durch Hinterschneidungen in der Ausnehmung festgehalten wird und dadurch eine sichere Verbindung der zu verbindenden Elemente in der Verbindungsrichtung erreicht wird.

Entsprechend diesem Prinzip besteht das erfindungsgemäße Montagesystem aus mehreren miteinander verbindbaren und voneinander lösbaren Montageelementen, wobei jedes Montageelement eine Grundplatte aufweist, auf der jeweils ein Ventil festgelegt werden kann, und diese Grundplatten gemäß dem oben erläuterten Verbindungsprinzip aneinander angesetzt und miteinander verbunden werden. Die Montageelemente können innerhalb eines Gerätes befestigt werden, und es können beliebige Aneinanderreihungen von Montageelementen und damit Zusammenschaltungen von Ventilen vorgenommen werden. Da die Ventile lösbar auf den Grundplatten befestigt sind, beispielsweise indem an der Grundplatte zapfenartige Aufsteckelemente angeordnet sind, auf welche die Ventile aufsteckbar sind, ist ein sehr rascher Einbau und Ausbau der Ventile möglich.

Im folgenden wird anhand der beigefügten Zeichnungen ein Ausführungsbeispiel für ein Montagesystem nach der Erfindung näher erläutert.

In den Zeichnungen zeigen:
- Fig. 1: in explodierter Darstellung eine Seitenansicht mehrerer Montage-elemente des Montagesystems;
- Fig. 1A: die Montageelemente nach Fig. 1 in vergrößerter Teildarstellung in einem parallel zur Längsmittelachse verlaufenden Schnitt;
- Fig. 2: die Montageelemente nach Fig. 1 in zusammengestecktem Zustand in Aufsicht;
- Fig. 2A: die Montageelemente nach Fig. 2 in einer Ansicht in Längsrichtung;
- Fig. 3: die Montageelemente nach Fig. 1 im nicht vollständig zusammengesteckten Zustand in perspektivischer, leicht verkleinerter Darstellung;
- Fig. 4 u. 5: eine aus drei Montageelementen bestehende Montageeinheit nach Fig. 1 bis 3 in zwei Seitenansichten aus unterschiedlichen Richtungen kurz vor dem Aufstecken der Ventile;
- Fig. 6: die Montageeinheit nach Fig. 4 und 5 in perspektivischer Darstellung;
- Fig. 7 - 9: in leicht vergrößerter Darstellung die Montageeinheit nach Fig. 4 - 6 in einer Ansicht aus drei verschiedenen Raumrichtungen mit aufgesteckten Ventilen;
- Fig. 10: die Montageeinheit nach Fig. 7 - 9 mit aufgesteckten Ventilen in perspektivischer Darstellung.

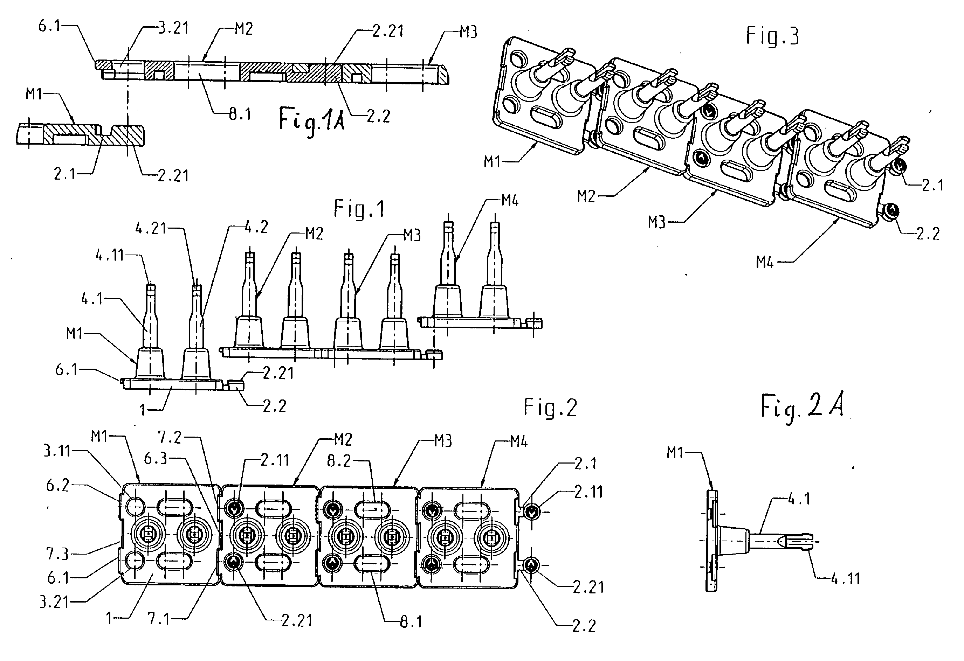

In den Fig. 1 bis 10 sind die Montageelemente mit M1 bis M7 bezeichnet. Einander entsprechende Einzelheiten der Montageelemente M1 bis M7 tragen jeweils immer die gleiche Bezugsziffer.

Einzelheiten über den Aufbau eines einzelnen Montageelementes sind insbesondere den Fig. 1, 1A, 2, 5 und 6 zu entnehmen.

Jedes Montageelement besitzt eine rechteckige, im dargestellten Ausführungsbeispiel quadratisch ausgebildete Grundplatte 1. Jede dieser Grundplatten 1 besitzt an einer ersten ihrer Außenkanten zwei nach außen ragende und sich nach außen hin zu einem kreisförmigen, knopfartigen Endstück erweiternde Halterungsfüße 2.1 und 2.2. An der zu dieser ersten Außenkante parallelen Außenkante bzw. an der an die erste Außenkante ansetzbaren Außenkante der Grundplatte 1 eines anderen Montageelementes besitzt die Grundplatte an den den Halterungsfüßen 2.1 und 2.2 gegenüberliegenden Stellen jeweils eine nach innen ragende und sich nach innen erweiternde Ausnehmung 3.1 und 3.2, wobei der Umriss der Ausnehmungen komplementär zum Umriss der Halterungs füße ausgebildet ist. Weiterhin entspricht die von der Außenkante gemessene Länge jedes Halterungsfußes 2.1, 2.2 der von der Außenkante gemessenen Länge der Ausnehmung 3.1, 3.2. Damit ist sichergestellt, dass beim Ineinanderdrücken von Halterungsfuß und Ausnehmung, wie beispielsweise in Fig. 1 dargestellt, die beiden Außenkanten der einander anzufügenden Grundplatten dicht aneinander anschließen.

Bei dem in den Zeichnungen dargestellten Ausführungsbeispiel reichen Halterungsfüße 2.1 und 2.2 und Ausnehmungen 3.1 und 3.2 nicht über die ganze Dicke der Grundplatte, sondern die Halterungsfüße weisen jeweils an ihrem äußeren Ende an der Oberseite einen noppenartigen Aufsatz 2.11 und 2.21 auf, und die Ausnehmungen 3.1 und 3.2 öffnen sich nur in einem unteren Teilabschnitt der Dicke der Grundplatte 1 zur Außenkante hin, während im oberen Teilabschnitt der Dicke der Grundplatte 1 die Ausnehmungen einen Abschnitt 3.11 und 3.21 aufweisen, der zur Außenkante hin geschlossen und kreisförmig ausgestaltet ist. Die noppenartigen Aufsätze 2.11 und 2.21 sind jeweils in ihrem Umriss komplementär zu den kreisförmigen Teilabschnitten 3.11 und 3.21 der Ausnehmungen ausgestaltet.

Mit dieser Ausgestaltung ist ein besonders sicheres Befestigen der einzelnen Montageelemente aneinander gewährleistet. Weiterhin wird der gute Sitz der aneinandergesetzten Grundplatten 1 noch dadurch verbessert, dass die zueinander parallelen Außenkanten jeweils mit zusätzlichen komplementär angeordneten Vorsprüngen 6.1, 6.2 und 6.3 bzw. 7.1, 7.2 und 7.3 versehen sind, die beim Ansetzen der Grundplatten 1 aneinander ineinander eingreifen, wie beispielsweise aus Fig. 2 gut zu erkennen, gemäß der vier Montageelemente M1 bis M4 in dieser Weise aneinander befestigt sind.

Weiterhin sind die Grundplatten 1 mit zwei parallel zueinander verlaufenden Langlöchern 8.1 und 8.2 versehen, die zur Aufnahme von Schraubverbindungen dienen können, mit denen die Montageelemente innerhalb eines Gerätes festgelegt werden können.

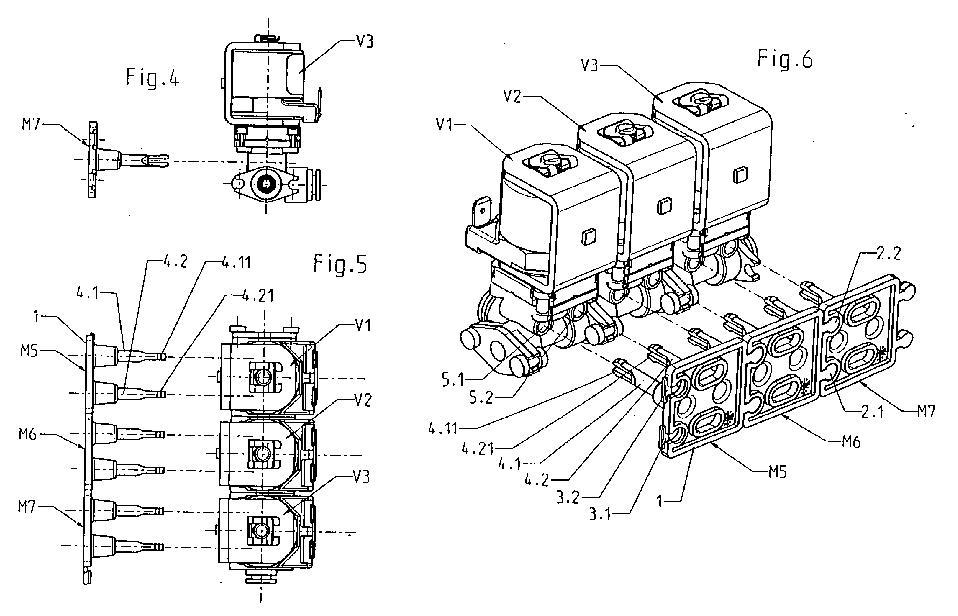

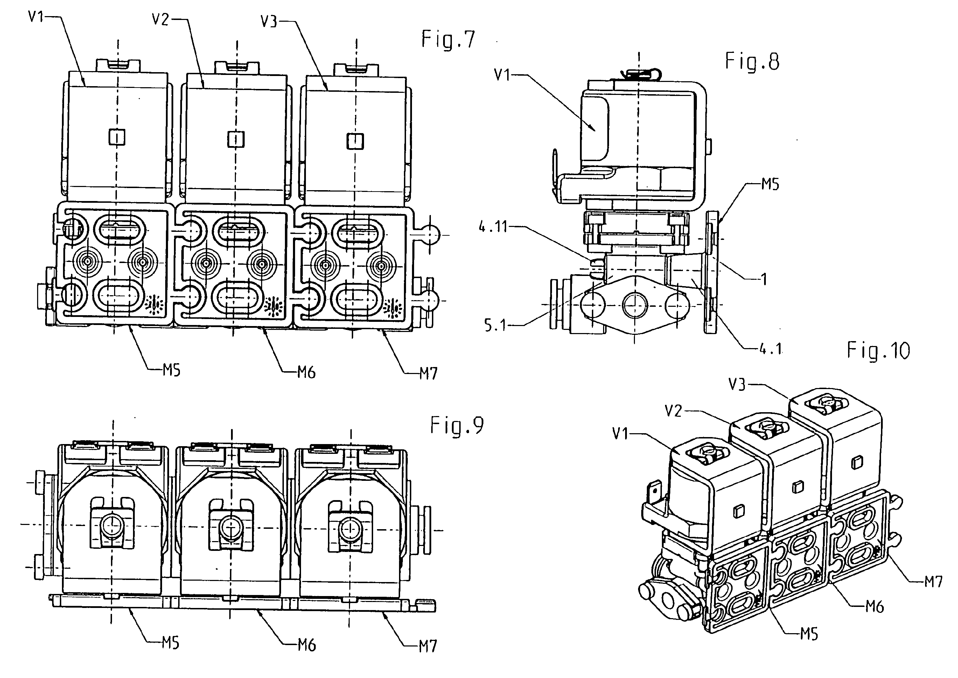

Wie aus den Fig. 4 bis 10 zu ersehen, können auf den Montageelementen in einfacher Weise Magnetventile V1 bis V 3 befestigt werden. Hierzu sind an der Oberseite jeder Grundplatte 1 eines Montageelementes zwei parallel nach oben ragende zapfenartige Aufsteckelemente 4.1 und 4.2 angeordnet, die an ihrem freien Ende mit Arretierungselementen 4.11 und 4.21 versehen sind. Auf diese Aufsteckelemente 4.1 und 4.2 werden die Magnetventile V1 bis V3 aufgesteckt. Dabei greifen die Aufsteckelemente 4.1 und 4.2 in entsprechende, am Ventilgehäuse angeordnete Hülsen oder Bohrungen 5.1 und 5.2 ein. Nach dem Aufstecken rasten die Arretierungselemente 4.11 und 4.21 ein, und das jeweilige Ventil ist lösbar am Montageelement befestigt. Die endgültige Montageeinheit ist in den Fig. 7 bis 10 dargestellt. Diese Montageeinheit kann in nicht dargestellter Weise in ein Gerät, dem kaltes oder heißes Wasser zugeführt werden soll, eingebaut sein. Zweckmäßig werden in diesem Fall erst die Montageelemente im Gerät befestigt und dann die Ventile aufgesteckt und zusammengeschaltet.

In dem dargestellten Ausführungsbeispiel besitzen die Grundplatten 1 lediglich an zwei zueinander parallelen Seiten Halterungsfüße bzw. Ausnehmungen. Selbstverständlich ist es auch möglich, die Grundplatten der Montageelemente an allen vier Seiten mit entsprechenden Halterungsfüßen und Ausnehmungen zu versehen. Es ist dann möglich, in einer Ebene in zwei Raumrichtungen beliebige Ventilkombinationen anzuordnen. Bei einer solchen Ausgestaltung kann jede Grundplatte jeweils an einer Außenkante zwei Halterungsfüße und an der zu dieser Außenkante parallelen Außenkante zwei Ausnehmungen aufweisen. Es ist aber auch möglich, dass jede Grundplatte an den Außenkanten jeweils einen Halterungsfuß und eine Ausnehmung aufweist, die so angeordnet sind, dass beim beliebigen aneinander Ansetzen der Grundplatten immer ein Halterungsfuß einer Ausnehmung zugeordnet ist.

## Patentansprüche

1. Montagesystem für Ventile und Ventilgruppen, **dadurch gekennzeichnet, dass** es aus mehreren miteinander verbindbaren und voneinander lösbaren Montageelementen (M1 bis M7) aufgebaut ist, wobei jedes Ventil (V1 bis V3) auf eine rechteckig ausgebildete Grundplatte (1) eines Montageelementes aufsetzbar und auf dieser festlegbar ist und jeweils die Grundplatte (1) eines ersten Montageelements an mindestens einer ersten Außenkante mindestens einen nach außen ragenden und sich nach außen erweiternden Halterungsfuß (2.1, 2.2) hat, während die an die erste Außenkante ansetzbare Außenkante der Grundplatte (1) eines zweiten Montageelementes an der beim Ansetzen dem Halterungsfuß (2.1, 2.2) gegenüberliegenden Stelle eine nach innen ragende und sich nach innen erweiternde Ausnehmung (3.1, 3.2) aufweist, wobei der Umriss der Ausnehmung (3.1, 3.2) komplementär zum Umriss des Halterungsfußes (2.1, 2.2) ausgebildet ist und die von der Außenkante gemessene Länge des Halterungsfußes (2.1, 2.2) der von der Außenkante gemessenen Länge der Ausnehmung (3.1, 3.2) entspricht.

2. Montagesystem nach Anspruch 1, **dadurch gekennzeichnet, dass** jede Grundplatte (1) eines Montageelementes (M1 bis M7) an mindestens einer ersten Außenkante zwei Halterungsfüße (2.1, 2.2) und an der zur ersten parallelen zweiten Außenkante zwei Ausnehmungen (3.1, 3.2) aufweist.

3. Montagesystem nach Anspruch 1, **dadurch gekennzeichnet, dass** jede Grundplatte eines Montageelementes an mindestens einer ersten Außenkante einen Halterungsfuß und eine Ausnehmung und an der zur ersten parallelen zweiten Außenkante an der dem Halterungsfuß der ersten Außenkante gegenüberliegenden Stelle eine Ausnehmung und an der der Ausnehmung der ersten Außenkante gegenüberliegenden Stelle einen Halterungsfuß aufweist.

4. Montagesystem nach einem der Ansprüche 1 bis 3, **dadurch gekennzeichnet, dass** jeder Halterungsfuß (2.1, 2.2) an seinem äußeren Ende an der Oberseite oder Unterseite einen noppenartigen Aufsatz (2.11, 2.21) besitzt und die Ausnehmung (3.1, 3.2) jeweils nur in einem unteren oder oberen Teilabschnitt der Dicke der Grundplatte (1) sich zur Außenkante hin öffnet, während im oberen oder unteren Teilabschnitt der Dicke der Grundplatte (1) die Ausnehmung (3.11, 3.21) zur Außenkante hin geschlossen ist und einen Umriss besitzt, der komplementär zum Umriss des noppenartigen Aufsatzes (2.11, 2.21) des Halterungsfußes (2.1, 2.2) ist.

5. Montagesystem nach Anspruch 4, **dadurch gekennzeichnet, dass** der noppenartige Aufsatz (2.11, 2.21) des Halterungsfußes (2.1, 2.2) und der geschlossene Teil (3.11, 3.21) der Ausnehmung (3.1, 3.2) einen kreisförmigen Umriss aufweisen.

6. Montagesystem nach einem der Ansprüche 1 bis 5, **dadurch gekennzeichnet, dass** die zueinander parallelen Außenkanten einer Grundplatte (1) jeweils mit zusätzlichen komplementär angeordneten Vorsprüngen (6.1, 6.2, 6.3) und Ausnehmungen (7.1, 7.2, 7.3) versehen sind, die beim Ansetzen der Grundplatten (1) aneinander ineinander eingreifen.

7. Montagesystem nach einem der Ansprüche 1 bis 6, **dadurch gekennzeichnet, dass** an der Oberseite jeder Grundplatte (1) eines Montageelements (M1 bis M 7) zwei parallel nach oben ragende zapfenartige Aufsteckelemente (4.1, 4.2) angeordnet sind, auf welche ein Ventil (V1 bis V 3) mittels an oder in seinem Gehäuse angeordneten Hülsen (5.1, 5.2) oder Bohrungen aufsteckbar ist.

8. Montagesystem nach Anspruch 7, **dadurch gekennzeichnet, dass** die Aufsteckelemente (4.1, 4.2) mit Arretierungselementen (4.11, 4.21) versehen sind.

9. Montagesystem nach einem der Ansprüche 1 bis 8, **dadurch gekennzeichnet, dass** jede Grundplatte (1) eines Montageelementes (M1 bis M7) parallel zueinander liegende Langlöcher (8.1, 8.2) zur Aufnahme von Befestigungsschrauben aufweist.
